# FASCICULE DE BREVET EUROPEEN

(11) **EP 1 707 832 B1**
(45) Date de publication et mention de la délivrance du brevet: **19.12.2007**
(21) Numéro de dépôt: 06290529.4
(22) Date de dépôt: 03.04.2006
(51) Int. Cl.: F16C 33/64, F16C 33/62

(54) **Procédé de renforcement par carbonitruration et réalisation de deux étapes de transformation de l'austénité en martensite**
Verstärkungsverfahren durch Karbonitrierung und Umwandlung von Austenit in Martensit in zwei Schritten
Reinforcing method by carbonitriding and transforming the austenite in martensite in two steps

(30) Priorité: 01.04.2005 FR 0503250
(43) Date de publication de la demande: 04.10.2006
(73) Titulaire: S.N.R. ROULEMENTS, 74000 Annecy (FR)
(72) Inventeur: Lornage-Coulon, Sandrine, 42160 Andrezieux Boutheon (FR); Garnier, Sébastien, 74600 Seynod (FR); Simon, Thibault, 74000 Annecy (FR); Girodin, Daniel, 74150 Marcellaz-Albanais (FR)
(74) Mandataire: Bredema

(56) Documents cités:
- EP-A- 0 626 468
- EP-A- 0 950 723
- US-A- 5 997 661
- US-B1- 6 315 455

## Description

L'invention concerne un procédé de renforcement d'une pièce en acier riche en carbone, c'est-à-dire dans le cadre de la présente comprenant entre 0,75% et 1,1% en poids de carbone, ainsi qu'une pièce renforcée par mise en oeuvre dudit procédé.

En particulier, la pièce renforcée peut être une partie constitutive d'un roulement, notamment l'une des bagues mais éventuellement les corps roulants.

De façon avantageuse, l'invention trouve son application pour le renforcement des bagues d'un roulement de boîte de vitesses pour véhicule automobile. En effet, ce type de roulements étant lubrifié par l'huile de la boîte, les bagues sont soumises à une pollution par des particules solides qui, lors de la rotation, induisent l'apparition de défauts de surface. Or, dans des aciers classiques, ces défauts de surface provoquent une détérioration de la pièce dans le temps sous l'effet des contraintes subies lors de l'utilisation, ce qui est notamment préjudiciable à la durée de vie du roulement. En particulier, l'invention propose donc des roulements de boîte de vitesses qui présentent une durée de vie améliorée.

On connaît de l'art antérieur des procédés de carbonitruration des aciers qui, en enrichissant la couche superficielle en azote et en carbone, permet après trempe et revenu d'obtenir un durcissement de ladite surface. En particulier, le document EP-A-0 626 468 décrit l'application d'un tel procédé à un acier riche en carbone. Le document EP 0 950 723 décrit également un procédé de renforcement d'une pièce en acier comprenant : une étape de carbonitruration de la pièce suivie d'au moins deux étapes successives de transformation de l'austénite en martensite : la première étape de transformation étant prévue pour obtenir un profil de quantité en poids d'austénite qui va décroissant de la surface au coeur de la pièce, le reste étant formé du pourcentage de précipités de fer contenant du carbone et de l'azote, et du pourcentage de martensite issu de la transformation ; la deuxième étape de transformation comprenant un traitement par refroidissement.

Toutefois, l'utilisation de la carbonitruration selon l'art antérieur ne permet pas notamment d'obtenir des bagues de roulement qui présentent des caractéristiques optimales vis-à-vis de la pollution par des particules solides.

Pour résoudre ce problème, la demanderesse a conduit des essais intensifs de sorte à mettre au point un procédé de renforcement qui permette d'allier la dureté de surface d'une pièce à sa capacité à conserver l'intégrité de celle-ci vis-à-vis des contraintes mécaniques et thermiques subies.

En particulier, selon l'invention, ce problème est résolu en proposant un procédé visant, après carbonitruration, à transformer l'austénite de façon particulière de sorte à obtenir des profils de quantité en poids d'austénite et de martensite qui sont optimaux.

A cet effet, et selon un premier aspect, l'invention propose un procédé de renforcement d'une pièce en acier comprenant entre 0,75% et 1,1% en poids de Carbone et au moins un élément d'alliage pris dans le groupe comprenant le Silicium, le Phosphore, le Molybdène, le Manganèse, le Chrome, le Soufre, le Nickel, le Vanadium, l'Aluminium, le Cuivre, le Tungstène, le Titane, le Cobalt, le Plomb, le reste étant du Fer, ladite pièce comprenant une zone de surface s'étendant depuis la surface jusqu'à une profondeur comprise entre 0,05 mm et 0,2 mm, une zone intermédiaire s'étendant depuis la zone de surface sur une épaisseur comprise entre 0,1 mm et 0,3 mm et une zone de coeur s'étendant depuis la zone intermédiaire jusqu'au centre de la pièce, ledit procédé comprenant :
- une étape de carbonitruration de la pièce dans des conditions telles que la zone de surface comprenne une quantité moyenne d'azote d'au moins 0,2 % en poids dans de l'austénite ; et, après ladite étape de carbonitruration ;
- au moins deux étapes successives de transformation de l'austénite en martensite :
   - la première étape de transformation étant prévue pour obtenir un profil de quantité en poids d'austénite qui est décroissant entre deux valeurs comprises respectivement :
      - entre 20% et 50% dans la zone de surface ;
      - entre 20% et 50% dans la zone intermédiaire ; et
      - entre 0 et 25% en poids dans la zone de coeur ;
      - le reste étant formé du pourcentage de précipités de fer contenant du carbone et de l'azote, et du pourcentage de martensite issu de la transformation ;
   - la deuxième étape de transformation comprenant un traitement par cryogénie réalisé à une température comprise entre 0°C et -90°C pendant un temps compris entre 0,5 heure et 1,5 heures, la deuxième étape de transformation étant telle que la quantité d'austénite diminue par rapport à la quantité d'austénite obtenue à l'issue de la première étape, au moins dans les zones de surface et intermédiaire, et qu'est obtenu un profil de quantité en poids d'austénite qui est décroissant entre deux valeurs comprises respectivement :
      - entre 10% et 40% dans la zone de surface ;
      - entre 10% et 30% dans la zone intermédiaire ; et
      - entre 0 et 25% en poids dans la zone de coeur ;
      - le reste étant formé du pourcentage de précipités de fer contenant du carbone et de l'azote, et du pourcentage de martensite issu des transformations successives ;
- une étape de défragilisation de la pièce, comprenant un revenu.

Selon un deuxième aspect, l'invention propose une pièce obtenue par la mise en oeuvre de ce procédé, ladite pièce étant réalisée dans un acier comprenant entre 0,75% et 1,1 % en poids de Carbone et au moins un élément d'alliage pris dans le groupe comprenant le Silicium, le Phosphore, le Molybdène, le Manganèse, le Chrome, le Soufre, le Nickel, le Vanadium, l'Aluminium, le Cuivre, le Tungstène, le Titane, le Cobalt, le Plomb, le reste étant du Fer, ladite pièce comprenant une zone de surface s'étendant depuis la surface jusqu'à une profondeur comprise entre 0,05 mm et 0,2 mm, une zone intermédiaire s'étendant depuis la zone de surface sur une épaisseur comprise entre 0,1 mm et 0,3 mm et une zone de coeur s'étendant depuis la zone intermédiaire jusqu'au centre de la pièce, ladite pièce ayant un profil de quantité en poids d'austénite qui est décroissant entre deux valeurs comprises respectivement entre 10% et 40% dans la zone de surface, entre 10% et 30% dans la zone intermédiaire et entre 0 et 25% en poids dans la zone de coeur, le reste étant formé de précipités de fer contenant du carbone et de l'azote, et du complément de martensite.

Selon un troisième aspect, l'invention propose un roulement comprenant une bague intérieure, une bague extérieure et des corps roulant disposés entre lesdites bagues de sorte à permettre la rotation relative desdites bagues, dans lequel au moins l'une des bagues et/ou les corps roulants sont des pièces renforcées selon l'invention.

D'autres objets et avantages de l'invention apparaîtront au cours de la description qui suit.

Le procédé selon l'invention a pour but de renforcer une pièce en acier riche en carbone. En particulier, la mise en oeuvre du procédé permet d'améliorer les propriétés mécaniques de surface d'une pièce en acier, notamment la dureté et la capacité à conserver son intégrité.

De façon avantageuse, le procédé selon l'invention permet d'améliorer la résistance à l'indentation et de limiter les dégradations générées dans le temps par des contraintes mécaniques et thermiques superficielles, notamment au niveau des indents, ce qui permet de conserver l'intégrité de la surface dans le temps

Le procédé de renforcement s'applique à des aciers riches en carbone, c'est-à-dire comprenant typiquement entre 0,75% et 1,1% en poids de carbone. En outre, les aciers utilisés incluent au moins un élément d'alliage pris dans le groupe comprenant le Silicium, le Phosphore, le Molybdène, le Manganèse, le Chrome, le Soufre, le Nickel, le Vanadium, l'Aluminium, le Cuivre, le Tungstène, le Titane, le Cobalt, le Plomb, le reste étant du Fer.

Ces aciers sont typiquement utilisés dans des domaines d'application pour lesquels des charges importantes, tant statiques que dynamiques, sont subies. En particulier, pour réaliser les parties constitutives des roulements, on utilise ce type d'acier, et notamment un acier dénommé 100Cr6 dont la composition en pourcentage pondéral est donnée ci-dessous :

| | | | |
|---|---|---|---|
| C : | 0,95-1,05: | Si: | 0,17-0,37; |
| Mn: | 0,2-0,4; | P : | 0 - 0,027 ; |
| S : | 0-0,02; | Cr: | 1,3-1,65; |
| Mo: | 0-0,15; | Ni: | 0-0,3; |
| V : | 0-0,1 ; | Al: | 0-0,1 ; |
| Cu: | 0-0,25; | W : | 0-0,1; |
| Ti : | 0-0,05; | Co: | 0-0,1; |
| Pb : | 0 - 0,15; | le reste étant du Fer | |

La mise en oeuvre du procédé sur des aciers de ce type permet d'obtenir des parties constitutives de roulements qui présentent une durée de vie améliorée du fait de la limitation des dégâts occasionnés par les contacts entre des polluants solides et les surfaces de roulement de ces pièces.

Pour renforcer une pièce de façon optimale, la demanderesse a trouvé qu'il était utile de définir, dans l'épaisseur de ladite pièce, les trois zones suivantes :
- une zone de surface s'étendant depuis la surface jusqu'à une profondeur comprise entre 0,05 mm et 0,2 mm ;
- une zone intermédiaire s'étendant depuis la zone de surface sur une épaisseur comprise entre 0,1 mm et 0,3 mm ; et
- une zone de coeur s'étendant depuis la zone intermédiaire jusqu'au centre de la pièce.

Et, comme exposé ci-dessous, le procédé de renforcement permet d'obtenir des compositions en différentes phases solides qui sont particulières en fonction de ces zones, ce qui permet d'optimiser les caractéristiques mécaniques souhaitées.

Pour ce faire, le procédé prévoit une étape de carbonitruration de la pièce. De façon connue, la carbonitruration permet d'enrichir en azote et en carbone notamment les zones de surface et intermédiaire de la pièce par diffusion en phase austénitique. Dans le cadre de l'invention, les conditions de l'étape de carbonitruration sont fixées de sorte que la zone de surface comprenne une quantité moyenne d'azote d'au moins 0,2 % en poids dans de l'austénite.

Selon un mode de réalisation, l'étape de carbonitruration est réalisée en phase gazeuse, ce qui offre la possibilité d'adapter les paramètres de traitement en fonction des propriétés et des structures métallurgiques souhaitées.

Dans un exemple de réalisation, l'étape de carbonitruration est réalisée dans un four avec les conditions suivantes :
- atmosphère comprenant au moins du monoxyde de carbone, du dihydrogène et de l'azote gazeux ;
- temps compris entre 1 et 10 heures ;
- température comprise entre 800°C et 920°C ;
- potentiel carbone compris entre 0,90 et 1,26.

En particulier, l'atmosphère est formée à partir d'un mélange de gaz faiblement carburant, dit gaz support, qui peut être obtenu par réactions endothermiques d'hydrocarbures en dehors du four, ou par craquage dans le four de mélange azote - méthanol. Ces types d'atmosphère sont typiquement constitués d'environ 40% de H₂, 20% de CO et 40% de N₂.

En outre, pour réaliser la carbonitruration, l'atmosphère comprend un gaz additif ajouté directement dans le four pour augmenter le pouvoir nitrurant. Dans un exemple de réalisation, le gaz additif est formé d'ammoniac qui fournit l'apport en azote en se dissociant presque totalement par craquage lors de son entrée dans le four. Pour augmenter le pouvoir carburant de l'atmosphère, un gaz additionnel peut également être utilisé, par exemple du méthane ou du propane, en quantité adaptée pour régler le pouvoir carburant du gaz support. En effet, le carbone libre est issu de la décomposition du méthanol et du méthane, ce qui permet d'éviter la décarburation superficielle de la pièce. La présence simultanée de carbone et d'azote dans la zone de surface conduit également par diffusion à l'augmentation de la taille des précipités de fer contenant du carbone et de l'azote notamment dans la zone intermédiaire.

L'atmosphère de carbonitruration présente dans le four résulte du mélange, du craquage et des réactions des gaz introduits. Elle comprend principalement du CO, de l'H₂, du N₂, mais également de l'O₂, du CO₂, du NH₃, du CH₄ et de l'H₂O en plus faible quantité. De sa composition, on détermine le potentiel carbone de l'atmosphère du four. Par ailleurs, à température fixée, la quantité d'azote introduit dans la pièce est quasiment fonction uniquement de la quantité d'ammoniac introduit dans le four, celle-ci étant typiquement inférieure à 10%.

Dans un exemple de réalisation, l'atmosphère est formée à partir d'un gaz support obtenu par craquage d'un mélange azote - méthanol, d'ammoniac et d'un gaz additionnel contenant des alcanes, lesdits gaz étant introduits séparément dans le four.

Notamment pour la carbonitruration d'un acier de type 100Cr6, les conditions de carbonitruration utilisées sont : température comprise entre 830°C et 880°C ; temps compris entre 3 heures et 5 heures ; potentiel carbone supérieur ou égal à 0,9. Ces conditions permettent notamment d'augmenter le taux d'austénite résiduelle et de la stabiliser thermiquement et mécaniquement.

Pour un renforcement ultérieur optimal des pièces selon l'invention, la demanderesse a établi que les conditions de l'étape de carbonitruration pouvaient être telles qu'à l'issue de celle-ci, le profil de quantité en poids d'azote diminue entre 0,8% et 0,1% depuis la surface jusqu'au fond de la zone intermédiaire, le profil d'enrichissement en poids de carbone passant par un maximum inférieur ou égal à 0,4% dans la même profondeur.

Après l'étape de carbonitruration, l'invention prévoit au moins deux étapes successives de transformation de l'austénite formée en martensite. En particulier, le profil d'austénite et donc de martensite présent dans les différentes zones de la pièce renforcée dépend essentiellement de l'enrichissement des zones en carbone et azote lors de l'étape de carbonitruration.

Dans un exemple de réalisation, la première étape de transformation comprend une trempe de la pièce, notamment réalisée à une température comprise entre 20°C et 240°C, pendant un temps inférieur à 1 heure.

La demanderesse a établi qu'il était optimal, à l'issue de cette première étape de transformation, que le profil de quantité en poids d'austénite soit décroissant entre deux valeurs comprises respectivement :
- entre 20% et 50% dans la zone de surface ;
- entre 20% et 50% dans la zone intermédiaire ; et
- entre 0 et 25% en poids dans la zone de coeur ;
- le reste étant formé du pourcentage de précipités de fer contenant du carbone et de l'azote, et du pourcentage de martensite issu de la transformation.

La deuxième étape de transformation comprend un traitement par cryogénie, notamment réalisée à une température comprise entre 0°C et -90°C, pendant un temps compris entre 0,5 heure et 1,5 heures. Notons que plus la température utilisée est basse, et plus l'austénite est transformée en martensite, ce qui induit une augmentation de la dureté de la pièce. En particulier, on peut estimer qu'une température de -65°C transforme en moyenne 50% de l'austénite présente, la transformation étant toutefois légèrement plus marquée dans les zones plus enrichies.

L'utilisation d'un traitement cryogénique permet de ne transformer qu'une partie de l'austénite, ce qui permet de conserver une quantité suffisante pour combiner dureté et capacité de conserver l'intégrité de la surface. Par conséquent, l'étape de traitement par cryogénie peut être adaptée afin d'obtenir les quantités optimales d'austénite par rapport à la tenue en pollution de bagues de roulement, notamment pour boîtes de vitesses.

La demanderesse a établi qu'il était optimal que la deuxième étape de transformation soit prévue pour diminuer, au moins dans les zones de surface et intermédiaire, la quantité d'austénite obtenue à l'issue de la première étape et à obtenir un profil de quantité en poids d'austénite qui est décroissant entre deux valeurs comprises respectivement :
- entre 10% et 40% dans la zone de surface ;
- entre 10% et 30% dans la zone intermédiaire ; et
- entre 0 et 25% en poids dans la zone de coeur ;
- le reste étant formé du pourcentage de précipités de fer contenant du carbone et de l'azote, et du pourcentage de martensite issu des transformations successives.

Ces valeurs permettent notamment :
- de garantir une dureté élevée tout en conservant une certaine quantité d'austénite ;
- de limiter les dégradations superficielles de la pièce en cours d'utilisation sous l'effet des contraintes thermiques et mécaniques ;
- d'avoir un taux d'austénite réduit dans la zone de coeur pour garantir la stabilité dimensionnelle de la pièce.

A la suite de ces deux étapes de transformation, le procédé prévoit une étape de défragilisation de la pièce qui comprend un revenu réalisé par exemple à une température inférieure à 250°C pendant un temps compris entre 1 heure et 3 heures.

En variante, le procédé peut également prévoir une étape de lavage de la pièce, notamment de sa surface, avant l'étape de carbonitruration et entre chacune des étapes de transformation et de défragilisation, de sorte à limiter la présence néfaste de dépôts adhérents sur la pièce.

A l'issue du procédé de renforcement, on obtient une pièce présentant notamment les caractéristiques avantageuses suivantes :
- augmentation de la dureté de la pièce de manière à créer des défauts de surface dont la géométrie est moins nocive pour la durée de vie ;
- structure métallurgique capable « d'amortir » le passage répété de charge sur des indents. Ceci se traduit par l'obtention d'une structure riche en austénite stable thermiquement et mécaniquement car très enrichie en azote et en carbone ;
- contraintes résiduelles de compression importantes de manière à diminuer la propagation des fissures dans la pièce ;
- conservation d'une aptitude à la mise en forme et tenue en endurance en milieu non pollué au moins égales à celles de la pièce non renforcée.

On donne ci-dessous, un exemple de réalisation du procédé de renforcement d'une bague de boîte de vitesses réalisée en acier 100Cr6 :
- lavage préalable ;
- carbonitruration à 830°C pendant 4 heures, potentiel carbone 1, taux d'ammoniac ajouté 5% ;
- trempe à l'huile à 70°C pendant 30 minutes ;
- lavage ;
- traitement par cryogénie à -30°C pendant 1 heure ;
- lavage ;
- revenu à 170°C pendant 1 heure.

Par la mise en oeuvre de ce procédé, on peut obtenir une carbonitruration sur une profondeur typique de 0,4 mm de sorte à obtenir des pièces présentant des profils de quantité en poids d'austénite tels que défini ci-dessus à savoir :
un profil de quantité en poids d'austénite qui est décroissant entre deux valeurs comprises respectivement entre 10% et 40% dans la zone de surface, entre 10% et 30% dans la zone intermédiaire et entre 0 et 25% en poids dans la zone de coeur, le reste étant formé de précipités de fer contenant du carbone et de l'azote, et du complément de martensite.

En particulier, la quantité en poids d'austénite est inférieure à 25% dans la zone de surface, et comprise entre 13% et 25% dans la zone intermédiaire. En outre, la zone de surface est sensiblement dépourvue de carbure, la zone intermédiaire présente des carbures de taille importante (environ 6 µm) et la zone de coeur présente des carbures plus fins qui sont enchâssés dans une matrice d'austénite et de martensite.

La pièce présente également comme caractéristiques mécaniques avantageuses :
- une dureté Vickers comprise entre 800 et 920 ;
- des valeurs de contraintes en compression comprise entre -100 MPa et -350 MPa dans la zone de surface.

Notons qu'en cas d'utilisation d'une étape de transformation mécanique, des valeurs de contraintes résiduelles comprises entre -500 MPa et -1000 MPa peuvent être atteintes dans la zone de surface.

L'invention concerne également un roulement dont notamment les bagues sont renforcées selon l'invention. Pour ce faire, au moins une partie de la zone de surface des bagues issues du procédé de renforcement est rectifiée, ce qui décale sur la bague la position des différentes zones définies précédemment. En particulier, la totalité de la zone de surface peut être rectifiée de sorte à disposer la zone intermédiaire en surface.

Les tests réalisés sur banc d'essai de tels roulements montrent, après indentation volontaire de la surface de roulement à l'aide de particules dures, une durée de vie du roulement supérieure à 120 heures, à comparer à 50 heures sans carbonitruration et à 76 heures avec carbonitruration et seulement une trempe sans deuxième étape de transformation.

## Revendications

1. Procédé de renforcement d'une pièce en acier comprenant entre 0,75% et 1,1% en poids de Carbone et au moins un élément d'alliage pris dans le groupe comprenant le Silicium, le Phosphore, le Molybdène, le Manganèse, le Chrome, le Soufre, le Nickel, le Vanadium, l'Aluminium, le Cuivre, le Tungstène, le Titane, le Cobalt, le Plomb, le reste étant du Fer, ladite pièce comprenant une zone de surface s'étendant depuis la surface jusqu'à une profondeur comprise entre 0,05 mm et 0,2 mm, une zone intermédiaire s'étendant depuis la zone de surface sur une épaisseur comprise entre 0,1 mm et 0,3 mm et une zone de coeur s'étendant depuis la zone intermédiaire jusqu'au centre de la pièce, ledit procédé comprenant :
- une étape de carbonitruration de la pièce dans des conditions telles que la zone de surface comprenne une quantité moyenne d'azote d'au moins 0,2 % en poids dans de l'austénite ; et, après ladite étape de carbonitruration ;
- au moins deux étapes successives de transformation de l'austénite en martensite :
- la première étape de transformation étant prévue pour obtenir un profil de quantité en poids d'austénite qui est décroissant entre deux valeurs comprises respectivement :
- entre 20% et 50% dans la zone de surface ;
- entre 20% et 50% dans la zone intermédiaire ; et
- entre 0 et 25% en poids dans la zone de coeur ;
- le reste étant formé du pourcentage de précipités de fer contenant du carbone et de l'azote, et du pourcentage de martensite issu de la transformation ;
- la deuxième étape de transformation comprenant un traitement par cryogénie réalisé à une température comprise entre 0°C et -90°C pendant un temps compris entre 0,5 heure et 1,5 heures, la deuxième étape de transformation étant telle que la quantité d'austénite diminue par rapport à la quantité d'austénite obtenue à l'issue de la première étape, au moins dans les zones de surface et intermédiaire, et qu'est obtenu un profil de quantité en poids d'austénite qui est décroissant entre deux valeurs comprises respectivement :
- entre 10% et 40% dans la zone de surface ;
- entre 10% et 30% dans la zone intermédiaire ; et
- entre 0 et 25% en poids dans la zone de coeur ;
- le reste étant formé du pourcentage de précipités de fer contenant du carbone et de l'azote, et du pourcentage de martensite issu des transformations successives ;
- une étape de défragilisation de la pièce, comprenant un revenu.

2. Procédé de renforcement selon la revendication 1, dans lequel l'étape de carbonitruration est réalisée dans les conditions suivantes :
- atmosphère comprenant au moins du monoxyde de carbone, du dihydrogène et de l'azote gazeux ;
- temps compris entre 1 et 10 heures ;
- température comprise entre 800°C et 920°C ;
- potentiel carbone compris entre 0,90 et 1,26.

3. Procédé de renforcement selon la revendication 2, dans lequel l'atmosphère est formée à partir d'un gaz support obtenu par craquage d'un mélange azote - méthanol, d'ammoniac et d'un gaz additionnel contenant des alcanes.

4. Procédé de renforcement selon la revendication 2 ou 3, dans lequel la température est comprise entre 830°C et 880°C, le temps est compris entre 3 heures et 5 heures, et le potentiel carbone est supérieur ou égal à 0,9.

5. Procédé de renforcement selon l'une quelconque des revendications 1 à 4, dans lequel les conditions de l'étape de carbonitruration sont telles qu'à l'issue de celle-ci, le profil de quantité en poids d'azote diminue entre 0,8% et 0,1% depuis la surface jusqu'au fond de la zone intermédiaire, le profil d'enrichissement en poids de carbone passant par un maximum inférieur ou égal à 0,4% dans la même profondeur.

6. Procédé de renforcement selon l'une quelconque des revendications 1 à 5, dans lequel la première étape de transformation comprend une trempe.

7. Procédé de renforcement selon la revendication 6, dans lequel la trempe est réalisée à une température comprise entre 20°C et 240°C pendant un temps inférieur à 1 heure.

8. Procédé de renforcement selon l'une quelconque des revendications précédentes, dans lequel le revenu est réalisé à une température inférieure à 250°C pendant un temps compris entre 1 heure et 3 heures.

9. Procédé de renforcement selon l'une quelconque des revendications précédentes, dans lequel un lavage de la pièce est réalisé avant l'étape de carbonitruration et entre chacune des étapes de transformation et de défragilisation.

10. Pièce obtenue par la mise en oeuvre d'un procédé selon l'une quelconque des revendications précédentes, ladite pièce étant réalisée dans un acier comprenant entre 0,75% et 1,1 % en poids de Carbone et au moins un élément d'alliage pris dans le groupe comprenant le Silicium, le Phosphore, le Molybdène, le Manganèse, le Chrome, le Soufre, le Nickel, le Vanadium, l'Aluminium, le Cuivre, le Tungstène, le Titane, le Cobalt, le Plomb, le reste étant du Fer, ladite pièce comprenant une zone de surface s'étendant depuis la surface jusqu'à une profondeur comprise entre 0,05 mm et 0,2 mm, une zone intermédiaire s'étendant depuis la zone de surface sur une épaisseur comprise entre 0,1 mm et 0,3 mm et une zone de coeur s'étendant depuis la zone intermédiaire jusqu'au centre de la pièce, ladite pièce ayant un profil de quantité en poids d'austénite qui est décroissant entre deux valeurs comprises respectivement entre 10% et 40% dans la zone de surface, entre 10% et 30% dans la zone intermédiaire et entre 0 et 25% en poids dans la zone de coeur, le reste étant formé de précipités de fer comprenant du carbone et de l'azote, et du complément de martensite.

11. Pièce selon la revendication 10, **caractérisée en ce qu'**elle présente une dureté Vickers comprise entre 800 et 920.

12. Pièce selon la revendication 10 ou 11, **caractérisée en ce qu'**elle présente des valeurs de contraintes en compression comprise entre -100 MPa et -350 MPa dans la zone de surface.

13. Pièce selon l'une quelconque des revendications 10 à 12, **caractérisée en ce que** la quantité en poids d'austénite est inférieure à 25% dans la zone de surface, et comprise entre 13% et 25% dans la zone intermédiaire.

14. Pièce selon l'une quelconque des revendications 10 à 13, **caractérisée en ce que** l'acier est de type 100Cr6.

15. Roulement comprenant une bague intérieure, une bague extérieure et des corps roulant disposés entre lesdites bagues de sorte à permettre la rotation relative desdites bagues, dans lequel au moins l'une des bagues et/ou les corps roulants sont des pièces selon l'une quelconque des revendications 10 à 14.

## Claims

1. A method for strengthening a steel part comprising from 0.75% to 1.1% by weight of carbon and at least one alloy element selected from the group consisting in silicon, phosphorus, molybdenum, manganese, chromium, sulphur, nickel, vanadium, aluminium, copper, tungsten, titanium, cobalt, lead, with the balance being iron, said part comprising a surface area extending from the surface down to a depth between 0.05 mm and 0.2 mm, an intermediate area extending from the surface area on a thickness between 0.1 mm and 0.3 mm and a core area extending from the intermediate area to the part centre, said method including:
- a step of carbonitriding of the part under such conditions that the surface area includes an average quantity of nitrogen of at least 0.2% by weight in austenite; and, after the carbonitriding step:
- at least two successive steps of transformation of austenite into martensite:
- the first transformation step being provided for obtaining a profile of amount of austenite by weight, which decreases between two values, respectively between:
- 20% and 50% in the surface area;
- 20% and 50% in the intermediate area; and
- 0 and 25% by weight in the core area;
- the balance being composed of the percentage of iron precipitates containing carbon and nitrogen, and of the percentage of martensite resulting from the transformation;
- the second transformation step comprising a cryogenic processing performed at a temperature between 0°C and -90°C for a time between 0.5 hours and 1.5 hours, the second transformation step being such that the amount of austenite decreases with respect to the amount of austenite obtained upon completion of the first step, at least in the surface and intermediate areas, and that a profile of amount of austenite, by weight, is obtained, which decreases between two values, respectively between:
- 10% and 40% in the surface area;
- 10% and 30% in the intermediate area; and
- 0 and 25% by weight in the core area;
- the balance being composed of the percentage of iron precipitates containing carbon and nitrogen, and the percentage of martensite resulting from the successive transformations;
- a step of hydrogen embrittlement relief, including a tempering.

2. A strengthening method according to claim 1, wherein the carbonitriding step is carried out under the following conditions:
- atmosphere comprising at least carbon monoxide, dihydrogen and gaseous nitrogen;
- time between 1 hour and 10 hours;
- temperature between 800°C and 920°C;
- carbon potential between 0.90 and 1.26.

3. A strengthening method according to claim 2, wherein the atmosphere is formed from a support gas obtained by cracking a mixture of nitrogen - methanol, ammonia and an additional gas containing alkanes.

4. A strengthening method according to any one of claims 1 to 4, wherein the temperature is between 830°C and 880°C, the time is between 3 hours and 5 hours, and the carbon potential is greater than or equal to 0.9.

5. A strengthening method according to claim 2 or 3, wherein the carbonitriding step conditions are such that, upon completion of the latter, the profile of the amount of nitrogen by weight decreases between 0.8% and 0.1% from the surface to the bottom of the intermediate area, the profile of the carbon enrichment by weight going through a maximum which is lower than or equal to 0.4% at the same depth.

6. A strengthening method according to any one of claims 1 to 5, wherein the first transformation step includes a quenching.

7. A strengthening method according to claim 6, wherein the quenching is carried out at a temperature between 20°C and 240°C for a time of less than 1 hour.

8. A strengthening method according to any one of the preceding claims, wherein the tempering is carried out at a temperature of less than 250°C for a time between 1 hour and 3 hours.

9. A strengthening method according to any one of the preceding claims, wherein the part is washed prior to the carbonitriding step and between each of the transformation and hydrogen embrittlement relief steps.

10. A part obtained by implementing a method according to any one of the preceding claims, said part being made of a steel having between 0.75% and 1.1% by weight of carbon and at least one alloy element selected from the group consisting in silicon, phosphorus, molybdenum, manganese, chromium, sulphur, nickel, vanadium, aluminium, copper, tungsten, titanium, cobalt, lead, with the balance being iron, said part comprising a surface area extending from the surface down to a depth between 0.05 mm and 0.2 mm, an intermediate area extending from the surface area down a thickness between 0.1 mm and 0.3 mm and a core area extending from the intermediate area to the part centre, said part having a profile of amount of austenite, by weight which decreases between two values respectively between 10% and 40% in the surface area, between 10% and 30% in the intermediate area and between 0 and 25% by weight in the core area, the balance being composed of iron precipitates comprising carbon and nitrogen, and of martensite.

11. A part according to claim 10, **characterized in that** it has a Vickers hardness between 800 and 920.

12. A part according to claim 10 or 11, **characterized in that** it has compression stress values between -100 MPa and -350 MPa in the surface area.

13. A part according to any one of claims 10 to 12, **characterized in that** the amount of austenite by weight is lower than 25 % in the surface area, and between 13% and 25% in the intermediate area.

14. A part according to any one of claims 10 to 13, **characterized in that** the steel is of the 100Cr6 type.

15. A bearing comprising an inner ring, an outer ring and rolling elements positioned between said rings so as to allow the relative rotation of said rings, wherein at least one of the rings and/or the rolling elements are parts according to any one of claims 10 to 14.

## Patentansprüche

1. Verfahren für die Verstärkung eines Stahlteils, das zwischen 0,75 und 1,1 Gewichtsprozent Kohlenstoff enthält und mindestens ein Legierungsteil aus der Gruppe, die Silizium, Phosphor, Molybdän, Mangan, Chrom, Schwefel, Nickel, Vanadium, Aluminium, Kupfer, Wolfram, Titan, Kobalt, Blei umfaßt, wobei der Rest Eisen ist, wobei das besagte Teil eine Oberflächenzone umfaßt, die sich ab der Oberfläche bis zu einer Tiefe von zwischen 0,05 mm und 0,2 mm erstreckt, eine Zwischenzone, die sich ab der Oberflächenzone über eine Dicke von zwischen 0,1 mm und 0,3 mm erstreckt, und eine Kernzone, die sich ab der Zwischenzone bis zum Mittelpunkt des Teils erstreckt, wobei das besagte Verfahren folgende Schritte umfaßt:
- Einen Schritt mit Karbonitrieren des Teils unter solchen Bedingungen, daß die Oberflächenzone eine durchschnittliche Menge Stickstoff von mindestens 0,2 Gewichtsprozent an Austenit enthält, und nach dem Schritt des Karbonitrierens :
- mindestens zwei aufeinander folgende Schritte mit Umwandlung des Austenits in Martensit:
- wobei der erste Schritt der Umwandlung vorgesehen ist, um ein Profil der Menge als Gewicht von Austenit zu erzielen, das zwischen zwei Werten abnimmt, die insbesondere liegen:
- zwischen 20% und 50% in der Oberflächenzone;
- beziehungsweise zwischen 20% und 50% in der Zwischenzone;
- beziehungsweise zwischen 0 und 25% in der Kernzone;
- wobei der Rest aus dem Prozentsatz an Eisenniederschlägen gebildet wird, die Kohlenstoff und Stickstoff enthalten, und aus dem Prozentsatz an Martensit, das aus der Umwandlung hervorgegangen ist;
- wobei der zweite Schritt der Umwandlung eine Bearbeitung mit Tiefsttemperaturtechnik umfaßt, die bei einer Temperatur von zwischen 0°C und -90°C während einer Zeit von zwischen 0,5 Stunde und 1,5 Stunden realisiert wird, wobei der zweite Schritt der Umwandlung so ist, daß die Menge an Austenit gegenüber der Menge Austenit abnimmt, die nach dem ersten Schritt erzielt wurde, und dies zumindest in der Oberflächenzone und der Zwischenzone, und daß ein Profil der Menge als Gewicht von Austenit erzielt wird, die zwischen zwei Werten abnimmt, die insbesondere liegen:
- zwischen 10% und 40% in der Oberflächenzone;
- beziehungsweise zwischen 10% und 30% in der Zwischenzone;
- beziehungsweise zwischen 0 und 25% in der Kernzone;
- wobei der Rest aus dem Prozentsatz an Eisenniederschlägen gebildet wird, die Kohlenstoff und Stickstoff enthalten, und aus dem Prozentsatz an Martensit, das aus den aufeinander folgenden Umwandlungen hervorgegangen ist;
- ein Schritt mit Entsprödung des Teils, der ein Aushärten umfaßt.

2. Verfahren für die Verstärkung nach Anspruch 1, **dadurch gekennzeichnet, daß** der Schritt des Karbonitrierens unter den folgenden Bedingungen realisiert wird:
- Atmosphäre, die mindestens Kohlenmonoxid, Biwasserstoff und gasförmigen Stickstoff enthält;
- Zeit zwischen 1 und 10 Stunden;
- Temperatur zwischen 800°C und 920°C;
- Kohlenstoffpotential zwischen 0,90 und 1,26.

3. Verfahren für die Verstärkung nach Anspruch 2, **dadurch gekennzeichnet, daß** die Atmosphäre ausgehend von einem Trägergas gebildet wird, das durch Kracken einer Mischung aus Stickstoff - Methanol, Ammoniak und einem zusätzlichen Gas erzielt wird, das Alkane enthält.

4. Verfahren für die Verstärkung nach Anspruch 2 oder 3, **dadurch gekennzeichnet, daß** die Zeit bei zwischen 3 Stunden und 5 Stunden liegt, und das Kohlenstoffpotential über oder gleich 0,9 beträgt.

5. Verfahren für die Verstärkung nach einem beliebigen der vorstehenden Ansprüche 1 bis 4, **dadurch gekennzeichnet, daß** die Bedingungen des Schritts mit Karbonitrieren so sind, daß danach das Profil der Menge in Gewicht an Stickstoff zwischen 0,8% und 0,1% ab der Oberfläche bis zum Boden der Zwischenzone abnimmt, wobei das Profil der Anreicherung an Kohlenstoffgewicht über ein Maximum von unter oder gleich 0,4% in der gleichen Tiefe geht.

6. Verfahren für die Verstärkung nach einem beliebigen der vorstehenden Ansprüche 1 bis 5, **dadurch gekennzeichnet, daß** der erste Schritt der Umwandlung eine Härtung umfaßt.

7. Verfahren für die Verstärkung nach Anspruch 6, **dadurch gekennzeichnet, daß** die Härtung bei einer Temperatur von zwischen 20°C und 240°C während einer Zeit von unter 1 Stunde durchgeführt wird.

8. Verfahren für die Verstärkung nach einem beliebigen der vorstehenden Ansprüche, **dadurch gekennzeichnet, daß** die Aushärtung bei einer Temperatur von unter 250°C während einer Zeit von zwischen 1 Stunde und 3 Stunden realisiert wird.

9. Verfahren für die Verstärkung nach einem beliebigen der vorstehenden Ansprüche, **dadurch gekennzeichnet, daß** vor dem Schritt des Karbonitrierens und zwischen jedem der Schritte der Umwandlung und der Entsprödung eine Wäsche des Teils durchgeführt wird.

10. Teil, das durch den Einsatz eines Verfahrens nach einem beliebigen der vorstehenden Ansprüche erzielt wird, wobei das besagte Teil aus einem Stahl ausgeführt ist, der zwischen 0,75 und 1,1 Gewichtsprozent Kohlenstoff enthält und mindestens ein Legierungsteil aus der Gruppe, die Silizium, Phosphor, Molybdän, Mangan, Chrom, Schwefel, Nickel, Vanadium, Aluminium, Kupfer, Wolfram, Titan, Kobalt, Blei umfaßt, wobei der Rest Eisen ist, wobei das besagte Teil eine Oberflächenzone umfaßt, die sich ab der Oberfläche bis zu einer Tiefe von zwischen 0,05 mm und 0,2 mm erstreckt, eine Zwischenzone, die sich ab der Oberflächenzone über eine Dicke von zwischen 0,1 mm und 0,3 mm erstreckt, und eine Kernzone, die sich ab der Zwischenzone bis zum Mittelpunkt des Teils erstreckt, wobei das besagte Teil ein Profil der Menge als Gewicht von Austenit hat, das zwischen zwei Werten abnimmt, die zwischen 10% und 40% in der Oberflächenzone, beziehungsweise zwischen 10% und 30% in der Zwischenzone und beziehungsweise zwischen 0 und 25% in der Kernzone liegen, wobei der Rest aus dem Prozentsatz an Eisenniederschlägen gebildet wird, die Kohlenstoff und Stickstoff enthalten, und aus dem Zusatz an Martensit.

11. Teil nach Anspruch 10, **dadurch gekennzeichnet, daß** es eine Vickers-Härte von zwischen 800 und 920 aufweist.

12. Teil nach Anspruch 10 oder 11, **dadurch gekennzeichnet, daß** es Belastungswerte bei Komprimierung in der Oberflächenzone von zwischen -100 MPa und -350 MPa aufweist.

13. Teil nach einem beliebigen der Ansprüche 10 bis 12, **dadurch gekennzeichnet, daß** die Menge in Gewicht an Austenit in der Oberflächenzone unter 25% und in der Zwischenzone zwischen 13% und 25% liegt.

14. Teil nach einem beliebigen der Ansprüche 10 bis 13, **dadurch gekennzeichnet, daß** der Stahl von der Art 100Cr6 ist.

15. Wälzlager, das einen inneren Ring, einen äußeren Ring und Rollkörper umfaßt, die zwischen den besagten Ringen angeordnet sind, so daß die relative Drehung der besagten Ringe möglich wird, bei dem mindestens einer der Ringe und/oder die Rollkörper Teile nach einem beliebigen der Ansprüche 10 bis 14 sind.
